Europäisches Patentamt

European Patent Office

Office européen des brevets

(19)

(11) Veröffentlichungsnummer: **0 082 273**
A2

(12) # EUROPÄISCHE PATENTANMELDUNG

(21) Anmeldenummer: 82109919.9

(22) Anmeldetag: 27.10.82

(51) Int. Cl.³: **B 60 B 17/00**

(30) Priorität: 21.12.81 DE 3150655

(43) Veröffentlichungstag der Anmeldung:
29.06.83 Patentblatt 83/26

(84) Benannte Vertragsstaaten:
AT BE CH DE FR GB IT LI LU NL SE

(71) Anmelder: Krupp Stahl AG
Alleestrasse 165
D-4630 Bochum 1(DE)

(72) Erfinder: Raquet, Erwin, Dr. rer. nat.
Rüsbergstrasse 15
D-5810 Witten(DE)

(72) Erfinder: Schneider, Heinz-Jürgen, Dr.-Ing.
Surkenstrasse 49
D-4630 Bochum(DE)

(74) Vertreter: Patentanwaltsbüro Cohausz & Florack
Schumannstrasse 97
D-4000 Düsseldorf 1(DE)

(54) Gummigefedertes Schienenrad.

(57) Die Erfindung bezieht sich auf ein gummigefedertes Schienenrad, das aus einer Radscheibe (3), einem Radreifen (1) und mehreren, in einem zwischen der Radscheibe (3) und dem Radreifen (1) bestehenden Ringspalt (7) in Umfangsrichtung verteilt angeordneten, radial vorgespannten, elastischên Hartgummiplatten (8) besteht. Bei einem solchen Schienenrad werden die Schallpegelspitzen im Frequenzspektrum der Kurvenkreischgeräusche und der Rollgeräusche dadurch vermindert, daß zwischen den Hartgummiplatten (8) in Umfungsrichtung Füllkörper (11) angeordnet sind, die in Umfangsrichtung einen gegenüber dem der vorgespannten Hartgummiplatte (8) kleinen Verformungswiderstand haben.

Fig.3

EP 0 082 273 A2

Croydon Printing Company Ltd

COHAUSZ & FLORACK 0082273

PATENTANWALTSBÜRO

SCHUMANNSTR. 97 D-4000 DÜSSELDORF 1

Telefon·(02 11) 68 33 46                    Telex 0858 6513 cop d

PATENTANWALTE:

Dipl.-Ing. W. COHAUSZ · Dipl.-Ing. R. KNAUF · Dipl.-Ing. H. B. COHAUSZ · Dipl.-Ing. D. H. WERNER

Gummigefedertes Schienenrad

Die Erfindung betrifft ein gummigefedertes Schienenrad gemäß Oberbegriff des Patentanspruchs 1, bekannt durch die DE-PS 1 206 006.

Die Geräusche, die ein derartiges Rad entwickelt, zeigen in ihrem Frequenzspektrum im hörbaren Bereich bei verschiedenen Frequenzen Schallpegelspitzen, die aus der durchschnittlichen Pegelhöhe herausragen und somit die Höhe und Intensität der Geräuschentwicklung bestimmen. Dies gilt sowohl für die Rollgeräusche wie auch in besonderem Maße für die Kurvenkreischgeräusche, die beim Durchfahren enger Gleisbögen vom Rad abgestrahlt und als besonders unangenehme Lärmbelästigung  empfunden werden.

Aufgabe der Erfindung ist es, die Geräuschentwicklung des gattungsgemäßen Schienenrades durch Abbau von Schallpegelspitzen im Frequenzspektrum der Kurvenkreischgeräusche und der Rollgeräusche zu vermindern, ohne die Federcharakteristik des Rades zu verschlechtern.

Eine weitere Aufgabe der Erfindung ist es, durch eine weitere Ausgestaltung der erfindungsgemäßen Maßnahmen die Dämpfungseigenschaften des Schienenrades zu verbessern.

Zur Lösung dieser Aufgabe dienen die im Patentanspruch 1 aufgeführten kennzeichnenden Merkmale.

Ausgestaltungen der Erfindung sind in den Unteransprüchen gekennzeichnet.

K/Tn.- 81/408
EU + J

Durch die Erfindung wird erreicht, daß Schallpegelspitzen, verursacht durch den Hohlraum zwischen benachbarten Hartgummiplatten im Ringraum zwischen Radscheibe und Radreifen, abgebaut werden. Gleichzeitig wird aber trotz des von den Füllkörpern eingenommenen Zwischenraumes zwischen den Hartgummiplatten durch die Verwendung hochelastischer Ansatzstücke bzw. hochelastischer Füllkörper erreicht, daß die beim Rollen des Rades auftretenden charakteristischen Dämpfungsbewegungen der tragenden Hartgummiplatten nicht beeinträchtigt werden, so daß die Federcharakteristik des gummigefederten Schienenrades nicht verschlechtert wird.

Die geräuschmindernde Wirkung ist im Hinblick auf das Kurvenkreischen der Räder dann besonders wirkungsvoll, wenn der erfindungsgemäß ausgefüllte Hohlraum zwischen zwei Hartgummiplatten in seiner Geometrie und seinem Volumen eine Luftschallresonanzfrequenz hat, die mit einer Körperschallresonanzfrequenz des Radreifens oder der Radscheibe, die bei der Kurvenfahrt intensiv zu Schwingungen angeregt wird, zusammenfällt oder in enger Nachbarschaft liegt, wie aus nachträglichen Untersuchungen der Frequenzspektren von Kurvenkreischgeräuschen festgestellt werden konnte.

Ein Vorteil der in Anspruch 3 bzw. 7 beschriebenen Ausführungsform der Erfindung besteht darin, daß die lippenförmigen Ansatzstücke beim Herstellen der Hartgummiplatten in einer Form mit angeformt werden können. Diese Ansatzstücke erhalten die nötige Verformbarkeit nicht durch die Materialauswahl, sondern durch ihre geometrische Form.

Schließlich ist noch darauf hinzuweisen, daß durch die Verwendung von Füllmaterial hoher innerer Dämpfung für die hochelastischen Ansatzstücke bzw. die hochelastischen Füllkörper als Nebeneffekt eine Verbesserung der Federcharakteristik erreicht wird. Dieser Nebeneffekt ist bei den

- 3 -                               0082273

Gegenständen mit den Merkmalen nach den Ansprüchen 10 und
11 besonders groß, so daß durch die Erfindung mit technisch einfachen Mitteln auch  die Aufgabe gelöst wird, die
Dämpfungscharakteristik des gummigefederten Schienenrades
zu verbessern.

Die Erfindung wird im nachfolgenden anhand  der Zeichnung beispielhaft bschrieben. Im einzelnen zeigen

Fig. 1          einen  Ausschnitt eines gummigefederten
                Schienenrades in Seitenansicht,

Fig. 2          einen Schnitt nach  der Linie A - A in
                Fig. 1,

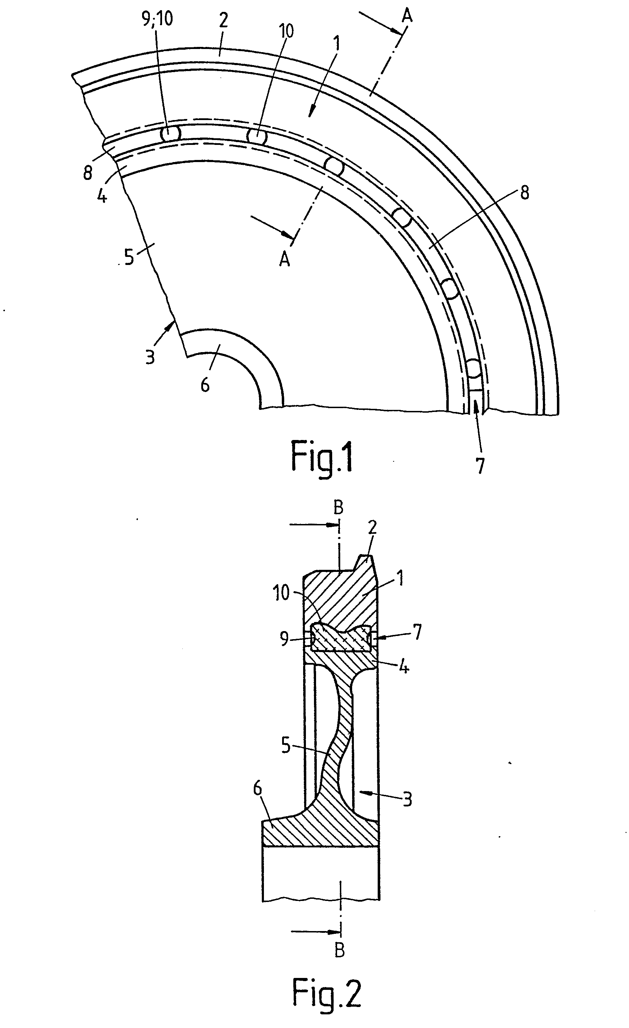

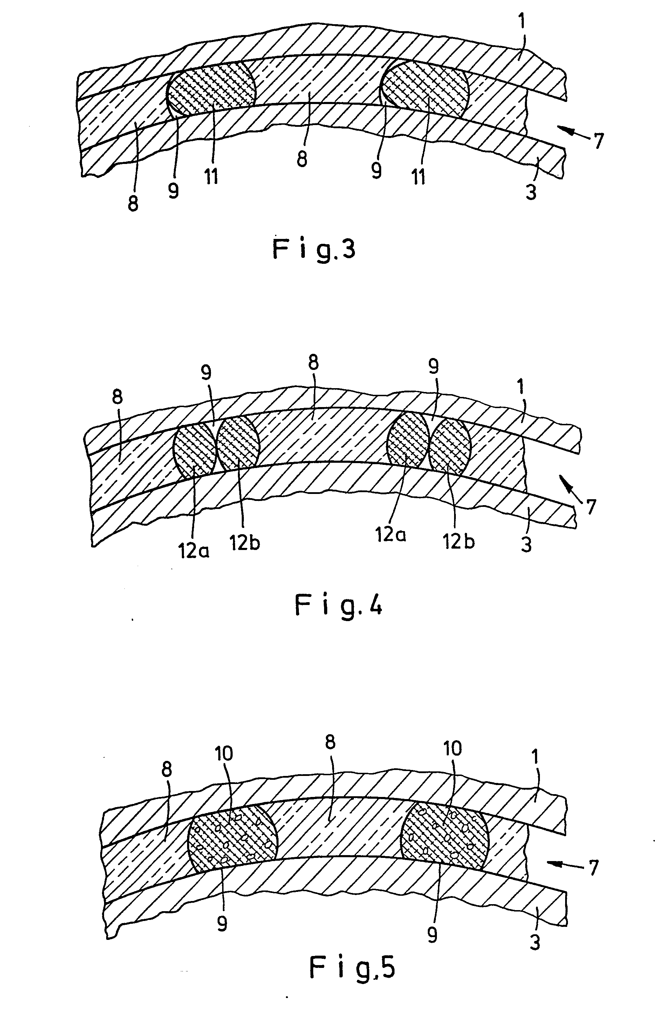

Fig. 3          eingebaute Hartgummiplatten mit einseitig
                angesetztem Ansatzstück, entsprechend
                einem Teilschnitt B - B in Fig. 2,

Fig.  4         eingebaute Hartgummiplatten mit beid-
                seits angesetzten Ansatzstücken,

Fig. 5          eingebaute Hartgummiplatten mit zwischen
                denselben angeordneten Füllkörpern,

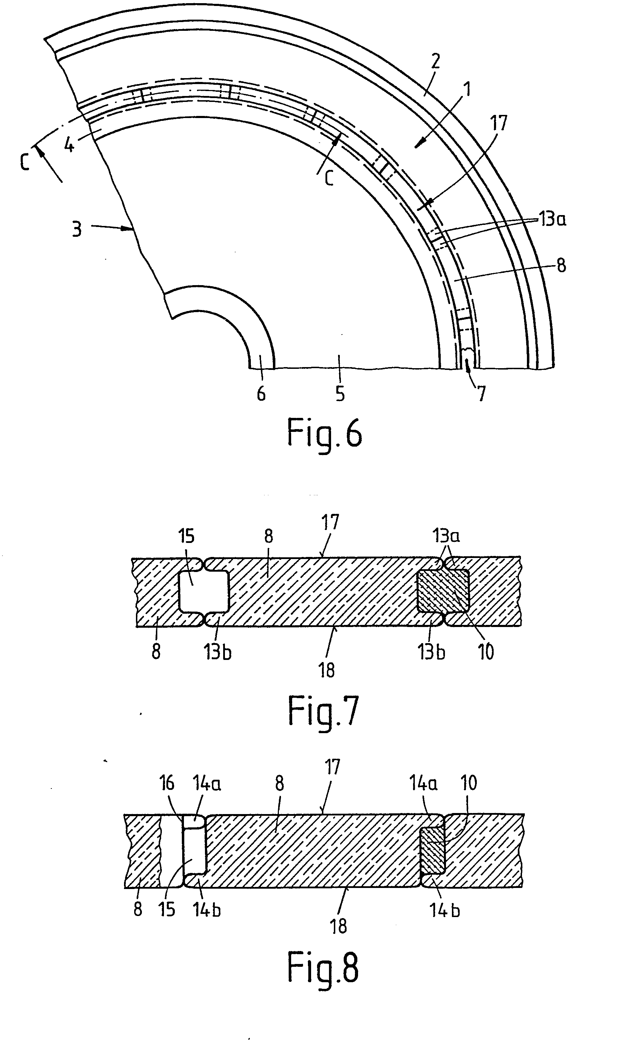

Fig. 6          einen Ausschnitt eines weiteren gummigefederten Schienenrades in Seitenansicht

Fig. 7          einen Schnitt nach der Linie C - C in
                Fig. 6,

Fig. 8          eine alternative Ausführungsform zu Fig. 7.

Bei dem in Fig. 1 dargestellten gummigefederten Schienenrad liegt zwischen einem mit einem Spurkranz 2 versehenen Radreifen 1 und einer aus einer Felge 4, einer Scheibe 5 und einer Nabe 6 bestehenden Radscheibe 3 ein Rinspalt 7. In dem Ringspalt 7 ist über den Umfang verteilt eine Vielzahl hoch vorgespannter Hartgummiplatten 8 in Abständen zueinander angeordnet. Die Zwischenräume zwischen den Hartgummiplatten 8 schließen einen an beiden Seiten des Rades offenen Hohlraum 9 ein, in dem hochelastische Füllkörper 10 eingebracht sind. Diese hochelastischen Füllkörper 10 sollen in dem gezeigten Beispiel aus Weichgummi mit einer Shore-Härte von 5 bis 20 bestehen und sind demnach in Relation zu den Hartgummiplatten 8, die aus Hartgummi mit einer Shore-Härte von mindestens 60, vorzugsweise 70 bis 90, ausgeführt sind, wesentlich elastischer und beeinflussen die Federcharakteristik des Rades nicht nachteilig. Vielmehr kommt ihnen ein zusätzlicher Dämpfungseffekt zu. Die Hartgummiplatten 8 bilden somit zusammen mit den Füllkörpern 10 einen aus Einzelelementen zusammengesetzten Ringkörper, wobei sich benachbarte Einzelelemente jeweils berühren.

Fig. 2 stellt einen Schnitt nach der Linie A - A durch Fig. 1 dar. Der Ringspalt 7, zu dem auch die ausgefüllten Hohlräume 9 gehören, muß nicht ringzylindrisch sein, sondern kann axial kontinuierlich oder diskontinuierlich profiliert sein.

In Fig. 3 ist ein Ausschnitt aus einem gummigefederten Schienenrad dargestellt, bei dem jeweils einseitig an jede Hartgummiplatte 8 als Füllkörper 11 ein Weichgummiansatzstück angesetzt, beispielsweise angeklebt, ist. Die Weichgummiansatzstücke füllen den entsprechenden Hohlraum 9 zwischen benachbarten Hartgummiplatten 8 jeweils weitgehend aus, in jedem Fall berühren sie die benachbarte Hartgummiplatte 8. Zur Montage des Schienenrades werden die Hartgummiplatten 8 so in den Ringspalt 7 eingesetzt, daß das einseitig angesetzte Weichgummiansatzstück bündig an der benachbarten Hartgummiplatte 8 anliegt.

In dem Ausführungsbeispiel nach Fig. 4 tragen die Hartgummiplatten 8 als Füllkörper 12a, 12b beidseitig angesetzte, hochelastische Ansatzstücke, beispielsweise ebenfalls aus Weichgummi. In diesem Fall werden die Hartgummiplatten 8 bei der MOntage des Schienenrades so in den Ringspalt 7 eingelegt, daß die Ansatzstücke einander berühren.

In dem Ausführungsbeispiel nach Fig. 5 sind zwischen benachbarte Hartgummiplatten 8 in die entsprechenden Hohlräume 9 hochelastische Füllkörper 10 aus Schaumstoff eingebracht. Die hochelastischen Füllkörper 10 können entweder lose eingefügt oder auch eingeklebt sein. Es ist aber auch vorgesehen, inbesondere zur nachträglichen Umrüstung der gattungsgemäßen Räder, die hochelastischen Fullkörper unter Benutzung des Hohlraumes 9 als Form im Rad selbst herzustellen. Zu diesem Zweck wird jeder Hohlraum 9 einseitig vorübergehend abgedeckt und anschließend ein viskoses Füllmaterial eingefüllt, das dann bei Raum- oder höherer Temperatur vernetzt und so den hochelastischen Füllkörper bildet. Dem viskosen Füllmaterial können außerdem Blähmittel zugefügt werden, so daß nach Vernetzung eine geschlossen porige, schaumgummiartige Füllung entsteht. Dabei berührt ein Füllkörper 10 nicht nur die benachbarten Hartgummiplatten 8, sondern er kann mit diesen auch eine innige Verbindung eingehen.

Fig. 6 zeigt einen Ausschnitt aus einem weiteren gummigefederten Schienenrad, bei dem im Ringspalt 7 zwischen dem Radreifen 1 und der Radscheibe 3 eine Vielzahl hoch vorgespannter Hartgummiplatten 8 so angeordnet sind, daß sich lippenartige Ansatzstücke benachbarter Hartgummiplatten berühren. Die Einzelheiten der Gestaltung sind aus Fig. 7, einem Schnitt nach der Linie C - C in Fig. 6, ersichtlich.

Fig. 7 zeigt, daß jede Hartgummiplatte 8 an den Stirnseiten zur benachbarten Hartgummiplatte 8 jeweils an zwei axial gegenüberliegenden Seitenkanten in Fortsetzung der inneren Seitenfläche 17 und der äußeren Seitenfläche 18 als Füllkörper 13a und 13b lippenartige Ansatzstücke aufweist, die nur einen Teil des Hohlraumes 9 zwischen benachbarten Hartgummiplatten 8 ausfüllt, diesen also praktisch nur nach außen verschließt, so daß noch ein Restraum 15 verbleibt. Bei der Ausführung nach Fig. 6 und 7 ist dabei zusätzlich in jeden zweiten derartigen Restraum 15 ein Füllkörper 10 aus hochelastischem Material eingebracht. Dieses Einbringen erfolgt durch nachträgliches Einspritzen von Silikonkautschuk, welches durch die leichte Verformbarkeit der lippenartigen Ansatzstücke technisch einfach durchführbar ist.

Bei der Ausführung nach Fig. 8 sind, abweichend von der vorigen Ausführung, jeweils an diagonal gegenüberliegenden Seitenkanten lippenartige Ansatzstücke als Füllkörper 14a und 14b vorgesehen. Auch bei dieser Ausführung verbleibt ein Restraum 15, der mit einem hoch_elastischen Füllkörper ausgefüllt sein kann.

Die elastischen Eigenschaften der Hartgummiplatten 8 werden durch die lippenartigen Ansatzstücke nicht beeinträchtigt, wenngleich auch diese aus Hartgummi bestehen. Sie erhalten jedoch die erforderliche und ausreichende Elastizität durch ihre geometrische Form. Die axiale Erstreckung der Ansatzstücke ist, wie durch die Kante 16 in Fig. 8 ersichtlich, geringer als die Dicke der Hartgummiplatten 8, damit die Ansatzstücke beim Vorspannen der Hartgummiplatten 8 nicht zu sehr verformt werden.

Fig. 7 und 8 können auch in sich als Alternativdarstellungen aufgefaßt werden, indem auf dem gesamten Radumfang sämtliche Resträume 15 nicht ausgefüllt oder mit einem hochelastischen Füllkörper 10 ausgefüllt sind. Auf diese Weise wird, wenn es sich bei dem Füllmaterial um Silikonkautschuk mit hoher innerer Dämpfung handelt, eine angestrebte Verbesserung der Dämpfungseigenschaften des Rades erreicht.

Versuche und Vergleichmessungen mit einem typischen Straßenbahnrad kleinen Durchmessers haben für den nicht ausgefüllten Hohlraum 9 eine Hohlraumfrequenz von ca. 1340 Hz ergeben. Diese lag sehr dicht bei einer ersten Oberschwingung des Radreifens. Dies bedeutete aber, daß bei axialen Schwingungen des Radreifens, insbesondere bei Kurvenfahrten, die Hohlraumschwingung sehr stark angeregt wurde und ein extremes Kurvenkreischen ergab. Nach Einsatz der Erfindung fielen diese extremen Schallpegelspitzen im Schallpegelspektrum weg, der durchschnittliche Schallpegel konnte um 6 - 8 dB(A) gesenkt werden. Dies bedeutet etwa eine Halbierung der von Menschen wahrgenommenen Lautstärke.

Ein weiterer Versuch mit Straßenbahnrädern, bei denen die Zwischenräume zwischen benachbarten Hartgummikörpern mit Silikonkautschuk ausgegossen wurden, der nach dem Angießen vernetzte, brachte bei etwa entsprechender Schallpegelsenkung im Rollgeräusch eine erhebliche Schwingungsdämpfung des Rades. Dies drückte sich in einer Erhöhung des Schwingungswiderstandes des Rades - auch mechanische Impedanz genannt - um den Faktor 10 bis 100 bei den Resonanzschwingungen des Radreifens aus. Eine so beträchtliche, nicht vor-

0082273

hersehbare Steigerung der Dämpfung der Eigenschwingungen des Radreifens unterdrückt sogar weitgehend das Kurvenkreischen, das auf axialen Eigenschwingungen des Radreifens beruht.

- 9 -

0082273

Patentansprüche:

1. Gummigefedertes Schienenrad mit einer Radscheibe, einem Radreifen und mehreren, in einem zwischen Radscheibe und Radreifen bestehenden Ringspalt in Umfangsrichtung verteilt angeordneten, radial vorgespannten, elastischen Hartgummiplatten mit einer Shore-Härte von mindestens 60 Shore,
d a d u r c h   g e k e n n z e i c h n e t ,
daß zwischen den Hartgummiplatten (8) in Umfangsrichtung Füllkörper (10;11;12a;12b;13a,13b;14a;14b) angeordnet sind, die in Umfangsrichtung einen gegenüber dem der vorgespannten Hartgummiplatten (8) kleinen Verformungswiderstand haben.

2. Gummigefedertes Schienenrad nach Anspruch 1,
d a d u r c h   g e k e n n z e i c h n e t ,
daß die Füllkörper (11; 12a; 12b) als Ansatzstücke an den Hartgummiplatten (8) ausgebildet sind und aus hochelastischem Material bestehen.

3. Gummigefedertes Schienenrad nach Anspruch 1,
d a d u r c h   g e k e n n z e i c h n e t ,
daß die Füllkörper (13a;13b;14a;14b) als Ansatzstücke an den Hartgummiplatten (8) aus dem Material der Hartgummiplatten (8) angeformt sind und einen kleineren Querschnitt als die Hartgummiplatten (8) haben.

4. Gummigefedertes Schienenrad nach Anspruch 1,
d a d u r c h   g e k e n n z e i c h n e t ,
daß die Füllkörper (10) aus hochelastischem Material bestehen und mit den Hartgummiplatten (8) einen Ringkörper bilden.

5. Gummigefedertes Schienenrad nach Anspruch 2,
d a d u r c h   g e k e n n z e i c h n e t ,
daß als Füllkörper (11) an jede Hartgummiplatte (8)
ein Weichgummiansatzstück angesetzt ist, welches die benachbarte Hartgummiplatte (8) berührt.

6. Gummigefedertes Schienenrad nach Anspruch 2,
d a d u r c h   g e k e n n z e i c h n e t ,
daß zur Bildung des Füllkörpers (12a,12b) beidseits
jeder Hartgummiplatte (8) je ein Weichgummiansatzstück
angesetzt ist, wobei sich die einander zugekehrten Weichgummistücke benachbarter Hartgummiplatten (8) berühren.

7. Gummigefedertes Schienenrad nach Anspruch 3,
d a d u r c h   g e k e n n z e i c h n e t ,
daß zur Bildung des Füllkörpers (13a;13b;14a;14b) an
jeder Hartgummiplatte (8) mindestens an zwei axial oder
diagonal gegenüberliegenden Seitenkanten in Fortsetzung
der inneren und äußeren Seitenfläche (17 bzw. 18) ein
lippenartiges Ansatzstück aus Hartgummi angesetzt ist und
zwischen gegenüberliegenden Ansatzstücken ein Restraum
(15) verbleibt.

8. Gummigefedertes Schienenrad nach Anspruch 7,
d a d u r c h   g e k e n n z e i c h n e t ,
daß der Restraum (15) durch einen Füllkörper (10) ausgefüllt ist.

9. Gummigefedertes Schienenrad nach Anspruch 4,
d a d u r c h   g e k e n n z e i c h n e t ,
daß die Füllkörper (10) aus Gummi, Schaumstoff oder dergl.
bestehen.

10. Gummigefedertes Schienenrad nach Anspruch 4, d a d u r c h   g e k e n n z e i c h n e t , daß die Füllkörper (10) durch Ausfüllen des durch den Zwischenraum zwischen benachbarten Hartgummiplatten (8) gebildeten Hohlraumes (9) mit einem vernetzenden viskosen Füllmaterial gebildet sind.

11. Gummigefedertes Schienenrad nach Anspruch 4, d a d u r c h   g e k e n n z e i c h n e t , daß die Füllkörper (10) durch Ausgießen des Hohlraumes (9) mit Silikonkautschuk gebildet sind.

-1/3-

0082273

Fig.1

Fig.2

Fig.3

Fig.4

Fig.5

Fig.6

Fig.7

Fig.8